# EUROPEAN PATENT SPECIFICATION

(11) **EP 3 790 260 B1**
(45) Date of publication and mention of the grant of the patent: **22.02.2023**
(21) Application number: 19195891.7
(22) Date of filing: 06.09.2019
(51) Int. Cl.: H04L 61/2514

(54) **DEVICE AND METHOD FOR IDENTIFYING NETWORK DEVICES IN A NAT BASED COMMUNICATION NETWORK**
VORRICHTUNG UND VERFAHREN ZUR IDENTIFIZIERUNG VON NETZWERKVORRICHTUNGEN IN EINEM NAT-BASIERTEN KOMMUNIKATIONSNETZWERK
DISPOSITIF ET PROCÉDÉ D'IDENTIFICATION DE DISPOSITIFS DE RÉSEAU DANS UN RÉSEAU DE COMMUNICATION À BASE DE NAT

(43) Date of publication of application: 10.03.2021
(73) Proprietor: Rohde & Schwarz GmbH & Co. KG, 81671 München (DE)
(72) Inventor: Guenther, Andy, 04229 Leipzig (DE); Weide, Joerg, 04279 Leipzig (DE); Schell, Joachim, 04317 Leipzig (DE)
(74) Representative: Rupp, Christian

(56) References cited:
- DE-A1-102017 222 916
- US-A1- 2009 190 511
- US-A1- 2010 161 795
- PARK HANBYEOL ET AL: "Identification of hosts behind a NAT device utilizing multiple fields of IP and TCP", 2016 INTERNATIONAL CONFERENCE ON INFORMATION AND COMMUNICATION TECHNOLOGY CONVERGENCE (ICTC), IEEE, 19 October 2016 (2016-10-19), pages 484-486, XP033015715, DOI: 10.1109/ICTC.2016.7763518 [retrieved on 2016-11-30]
- Elie Bursztein: "Time has something to tell us about Network Address Translation", , 1 January 2007 (2007-01-01), XP055637591, Retrieved from the Internet: URL:https://pdfs.semanticscholar.org/f137/ 1f3ec2888b5da503774a418cb0608528be73.pdf?_ ga=2.35248609.1777246084.1572442080-161823 4621.1572442080 [retrieved on 2019-10-30]
- WICHERSKI GEORG ET AL: "IP agnostic real-time traffic filtering and host identification using TCP timestamps", 38TH ANNUAL IEEE CONFERENCE ON LOCAL COMPUTER NETWORKS, IEEE, 21 October 2013 (2013-10-21), pages 647-654, XP032575834, ISSN: 0742-1303, DOI: 10.1109/LCN.2013.6761302 [retrieved on 2014-03-07]
- STEVEN M BELLOVIN: "A technique for counting natted hosts", PROCEEDINGS OF THE SECOND INTERNET MEASUREMENT WORKSHOP, IMW 2002 : MARSEILLE, FRANCE, NOVEMBER 6 - 8, 2002, NEW YORK, NY : ASSOCIATION FOR COMUTING MACHINERY, US, 6 November 2002 (2002-11-06), pages 267-272, XP058266369, DOI: 10.1145/637201.637243 ISBN: 978-1-58113-603-6
- BROIDO A ET AL: "Remote Physical Device Fingerprinting", IEEE TRANSACTIONS ON PROFESSIONAL COMMUNICATION, IEEE SERVICE CENTER, PISCATAWAY, NJ, US, vol. 2, no. 2, 1 February 2005 (2005-02-01), pages 93-108, XP011135161, ISSN: 0361-1434, DOI: 10.1109/TDSC.2005.26
- ORI ZAKIN ET AL: "Identifying computers hidden behind a NAT using machine learning techniques", ECIW 2007, THE 6TH EUROPEAN CONFERENCE ON INFORMATION WARFARE AND SECURITY : DEFENCE COLLEGE OF MANAGEMENT AND TECHNOLOGY, SHRIVENHAM, UK, 2 - 3 JULY 2007, ACADEMIC CONFERENCES, US, 1 January 2007 (2007-01-01), pages 335-340, XP009516922, ISBN: 978-1-905305-48-3

## Description

The invention relates to identifying network devices which are located in a communication network behind a network address translation (NAT) router. More specifically, the identification involves a fuzzy logic that is based on at least two different methods of identifying the network devices.

In conventional solutions, several methods are known to map network flows to physical devices that are located behind a NAT router. A first method is e.g. based on a linear regression analysis of an optional field in the TCP protocol (TCP Timestamp, RFC7323). A second method correlates the IPv4 Identification Field (RFC6864). KR20180109277A for example discloses a method and an apparatus for identifying a NAT host, based on a TCP/IP header and a HTTP cookie.

DE 10 2017 222 916 A1 discloses a device and method for identification of network devices.

PARK HANBYEOL ET AL, "Identification of hosts behind a NAT device utilizing multiple fields of IP and TCP", 2016 INTERNATIONAL CONFERENCE ON INFORMATION AND COMMUNICATION TECHNOLOGY CONVERGENCE (ICTC), IEEE, (20161019), pages 484 - 486 relates to identifying hosts behind a NAT device.

WICHERSKI GEORG ET AL, "IP agnostic real-time traffic filtering and host identification using TCP timestamps", 38TH ANNUAL IEEE CONFERENCE ON LOCAL COMPUTER NETWORKS, IEEE, (20131021), pages 647 - 654 relates to identification of hosts independent from an IP address. ORI ZAKIN ET AL: "Identifying computers hidden behind a NAT using machine learning techniques", ECIW 2007, THE 6TH EUROPEAN CONFERENCE ON INFORMATION WARFARE AND SECURITY, DEFENCE COLLEGE OF MANAGEMENT AND TECHNOLOGY, SHRIVENHAM, UK, 2 - 3 JULY 2007, ACADEMIC CONFERENCES, US, 1 January 2007, pages 335-340 relates to clustering sessions emanating from a NAT to identify an attacker.

However, recent changes in network traffic, notably in the Linux/Android kernel (>= version 4.10) and the Windows operating system (>= version 8.1), make the conventional methods obsolete as a stand-alone solution for identifying network devices behind a NAT router, as they are no longer able to deliver a precise result.

Therefore, the object of the invention is to provide a device for identifying network devices in a NAT based communication network that supports said recent changes in network traffic. Moreover, the object is to provide an according method and computer program.

The object is solved by the features of the first independent claim for the device and by the features of the second independent claim for the method. Further, it is solved by the features of an associated computer program product claim. The dependent claims contain further developments.

This is beneficial as it allows for independent estimation of the real, actual number of network devices in the NAT based communication network by two different methods. Each method calculates a number of network devices in the NAT based communication network and also provides a confidence value for each number. The confidence value is a value which indicates the likelihood of correctness of the respective number. Based on the two numbers of network devices, and by the two corresponding confidence values, a weighted result can be determined which is of increased accuracy, in particular when being applied to said changed network traffic. In other words, the present invention extends definite methods (e.g. based in TCP timestamps or IP identifiers) by fuzzy methods which allow to give a weighted result.

In particular, the NAT based communication network is a communication network connected to a network device and/or another communication network by means of a NAT router.

In particular, the network devices which can be identified by the device are behind a NAT router.

In particular, the device is connected to the NAT based communication network by means of a NAT router.

In particular, the network devices in the NAT based communication network are physical network devices.

The identification data includes a time-to-live (TTL), a GQUIC user agent identifier, a TCP fingerprint, clock skew, an SSL fingerprint, a network traffic classifier.

The processing unit is further configured to select the first method from: TTL correlation, GQUIC user agent identifier correlation, TCP fingerprinting, clock skew correlation, SSL fingerprinting, or network traffic classification correlation; and
the processing unit is further configured to select the second method from: TTL correlation, GQUIC user agent identifier correlation, TCP fingerprinting, clock skew correlation, SSL fingerprinting, or network traffic classification correlation;
wherein the first method and the second method are different.

In particular, TCP timestamp correlation includes correlation of TCP timestamps of different packets in the obtained network traffic, to determine a number of network devices in the NAT based communication network.

In particular, IP identifier correlation includes correlation of IP identifiers of different packets in the obtained network traffic, to determine a number of network devices in the NAT based communication network.

In particular, TTL correlation includes correlation of TTL values of different packets in the obtained network traffic, to determine a number of network devices in the NAT based communication network.

In particular, GQUIC user agent identifier correlation includes correlation of GQUIC user agent identifiers of different packets in the obtained network traffic, to determine a number of network devices in the NAT based communication network.

In particular, TCP fingerprinting includes correlation of TCP fingerprints of different packets in the obtained network traffic, to determine a number of network devices in the NAT based communication network.

In particular, http user agent correlation includes correlation of http user agents of different packets in the obtained network traffic, to determine a number of network devices in the NAT based communication network.

In particular, clock skew correlation includes correlation of clock skew values of different packets in the obtained network traffic, to determine a number of network devices in the NAT based communication network.

In particular, SSL fingerprinting includes correlation of SSL fingerprints of different packets in the obtained network traffic, to determine a number of network devices in the NAT based communication network.

In particular, network traffic classification correlation includes correlation of network traffic classifiers of different packets in the obtained network traffic, to determine a number of network devices in the NAT based communication network.

In particular, the processing unit can also perform a third method to determine a third number of network devices in the NAT based communication network and a third confidence value, based on the identification data. The weighted result then is based on the first number, the first confidence value, the second number, the second confidence value, the third number and the third confidence value. The third method can also be selected from the above listed methods.

In particular, an arbitrary number of methods can be performed, wherein the operating principle of performing these methods is identical to performing the first and second one. In case that an arbitrary number of methods is performed, each can be selected from the above listed items. In particular, all methods that are performed are pairwise different.

Advantageously and preferably, the processing unit is further configured to calculate the weighted result based on a fuzzy logic.

In particular, the first number, the first confidence value, the second number and the second confidence value are inputs parameters to the fuzzy logic. In case that more than two methods are performed by the processing unit 107, also a third number, a third confidence value, and so on, can be input parameters to the fuzzy logic.

In particular, the fuzzy logic implements inference rules which allow to perform set operations (e.g. union or average) on the input parameters of the fuzzy logic. In particular, based on the set operations at least one of the following can be determined: whether NAT is used or not; a minimum number of network devices in the NAT based communication network; a precise number of network devices in the NAT based communication network.

Advantageously and preferably, the first number is a minimum number of network devices in the NAT based communication network and/or the second number is a minimum number of network devices in the NAT based communication network.

This is beneficial, since at least a minimum value of network devices behind the NAT can be given, when a precise determination is not possible.

In particular, the term minimum number refers to a lower limiting value of detected network devices. That is, the actual number of devices can be higher, wherein the device determines the minimum amount of network devices which are distinguishable in the NAT based communication network.

The first confidence value is a value indicating the probability of correctness of the first number determined by the first method, and the second confidence value is a value indicating the probability of correctness of the second number determined by the second method.

Advantageously and preferably, the processing unit is further configured to indicate in the weighted result, a correspondence of network devices in the NAT based communication network to a network stream in the obtained network traffic.

In particular, the network stream is a tupel comprising source IP, source port, destination IP, destination port and a used protocol.

The processing unit is further configured to perform the first method to determine a first group of network devices in the NAT based communication network, based on the identification data,
perform the second method to determine a second group of network devices in the NAT based communication network (104), based on the identification data, and
calculate the weighted result based on the first group and based on the second group.

In particular, this ensures that network devices that are identified in a NAT based communication network can be grouped according to their common properties, or according to common properties of traffic sent and/or received by the network devices. The common properties include a TCP timestamp, an IP identifier, a time-to-live (TTL), a GQUIC user agent identifier, a TCP fingerprint, a http user agent, clock skew, an SSL fingerprint, a network traffic classifier. This also ensures that network streams corresponding to identified network devices can be grouped according to common properties.

An inventive method for identifying network devices which are located in a NAT communication network comprises the steps of: obtaining, by an obtaining unit of a device, network traffic sent to or from the NAT based communication network; extracting, by an extracting unit of the device, identification data from the obtained network traffic; and performing a first method to determine a first number of network devices in the NAT based communication network and a first confidence value, based on the identification data; performing a second method to determine a second number of network devices in the NAT based communication network and a second confidence value, based on the identification data; and calculating a weighted result based on the first number, the first confidence value, the second number and the second confidence value.

The method further comprises the step of selecting, by the processing unit, the first method from: TTL correlation, GQUIC user agent identifier correlation, TCP fingerprinting, clock skew correlation, SSL fingerprinting, or network traffic classification correlation; and
the step of selecting, by the processing unit, the second method from: TTL correlation, GQUIC user agent identifier correlation, TCP fingerprinting, clock skew correlation, SSL fingerprinting, or network traffic classification correlation;
wherein the first method and the second method are different.

Advantageously and preferably, the method further comprises the step of calculating, by the processing unit, the weighted result based on a fuzzy logic. Advantageously and preferably, the first number is a minimum number of network devices in the NAT based communication network and/or wherein the second number is a minimum number of network devices in the NAT based communication network.

The first confidence value is a value indicating the probability of correctness of the first number determined by the first method, and/or the second confidence value is a value indicating the probability of correctness of the second number determined by the second method.

The method further comprises the step of indicating, by the processing unit, in the weighted result, a correspondence of network devices in the NAT based communication network to a network stream in the obtained network traffic.

The method further comprises the steps of performing, by the processing unit, the first method to determine a first group of network devices in the NAT based communication network, based on the identification data; performing, by the processing unit, the second method to determine a second group of network devices in the NAT based communication network, based on the identification data; and
calculating, by the processing unit, the weighted result based on the first group and based on the second group.

The inventive method comprises the same advantages as the inventive device.

An inventive computer program product comprises program code for performing steps of the above described inventive method, when the computer program product runs on a computer or a digital signal processor.

The inventive computer program product comprises the same advantages as the inventive device.

An exemplary embodiment of the invention is now further explained with respect to the drawings by way of examples only, in which
- FIG. 1: shows a schematic view of a device according to an embodiment of the present invention;
- FIG. 2: shows a schematic view of a method according to an embodiment of the present invention.

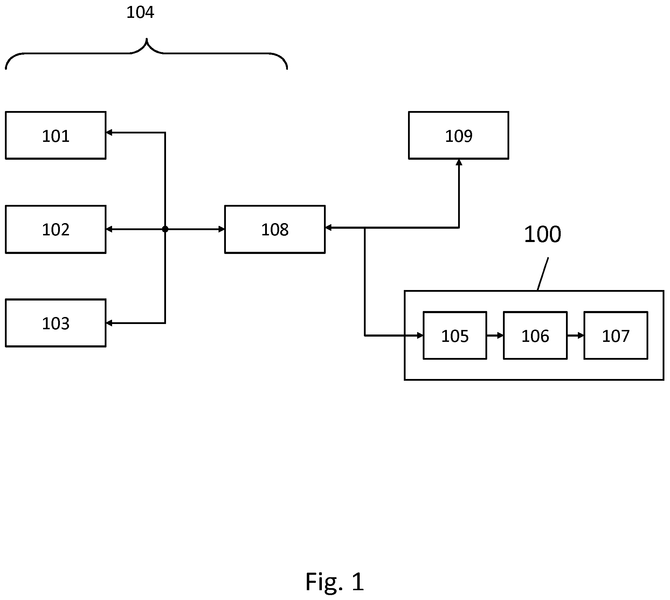

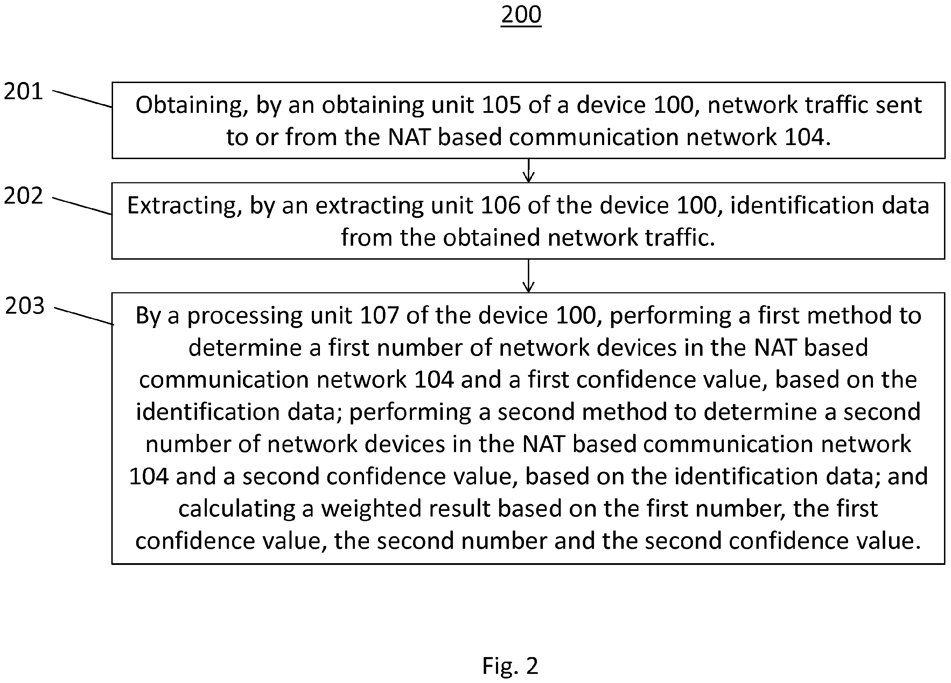

In the following, structure and function of an embodiment of the inventive device is going to be described based on Fig. 1. Then, based on Fig. 2, the function of an embodiment of the inventive method is described.

Fig. 1 shows an embodiment of the inventive device 100. The device 100 is connected to a NAT based communication network 104, and can in particular obtain network traffic which is exchanged between the NAT based communication network 104 and a network device 109. The NAT based communication network 104 comprises network devices 101, 102, 103. These network devices 101, 102, 103 are connected to a NAT router 108. Further, the NAT router 108 is connected to the network device 109. The device 100 is coupled to a connection of the NAT router 108 and the network device 109. This allows for obtaining the exchanged network traffic by the device 100. In the example embodiment shown in Fig. 1 the network devices 101, 102, 103 which are located behind the NAT router 108 (wherein "behind" indicates the perspective of the network devices 101, 102, 103 seen from the point of view of the device 100) shall be identified by the device 100, while they are exchanging network traffic with the network device 109 by means of the NAT router 108.

To this end, the device 100 obtains the network traffic sent to or from the NAT based communication network 104 by means of an obtaining unit 105. The obtained network traffic is analyzed, and identification data is extracted from the obtained network traffic by means of an extraction unit 106. Based on the identification data, a weighted result can be calculated which indicates a number of network devices 101, 102, 103 which are located in the NAT based communication network 104. To this end, the processing unit 107 performs a first method to determine a first number of network devices 101, 102, 103 in the NAT based communication network. By means of the first method, also a first confidence value is obtained by the processing unit 107, which indicates a probability of correctness of the previously calculated first number. The processing unit 107 also performs a second method to determine a second number of network devices 101, 102, 103, which are located in the NAT based communication network 104. Based on the second method, also a second confidence value is obtained, which indicates a probability of correctness of the second number. The above-mentioned weighted result is then calculated based on the first number, the first confidence value, the second number and the second confidence value. This ensures that several different methods can be used to determine a number of network devices 101, 102, 103 in the NAT based communication network 104, each. Each one of the determined numbers is associated with a corresponding confidence value. Based on all numbers and all confidence values, a weighted result can be calculated, in which a number with a high confidence value finds more consideration than a number with a low confidence value. The present invention is however not only limit to performing two methods at once. In particular, as already indicated above, an arbitrary number of methods can be applied.

FIG. 2 schematically shows a method 200 according to an embodiment of the present invention. The method is for identifying network devices which are located in a NAT based communication network 104. The method comprises a step of obtaining 201, by an obtaining unit 105 of a device 100, network traffic sent to or from the NAT based communication network 104. The method further comprises a step of extracting 202, by an extracting unit 106 of the device 100, identification data from the obtained network traffic. The method further comprises a step of performing 203 a first method to determine a first number of network devices in the NAT based communication network 104 and a first confidence value, based on the identification data; performing 203 a second method to determine a second number of network devices in the NAT based communication network 104 and a second confidence value, based on the identification data; and calculating 203 a weighted result based on the first number, the first confidence value, the second number and the second confidence value.

It is important to note that the inventive device and method very closely correspond. Therefore, all of the above said regarding the device is also applicable to the method. Everything which is described in the description and/or claimed in the claims and/or drawn in the drawings can be combined.

The invention is not limited to the illustrated embodiment. The network devices may be mobile terminals such as mobile phones, but also computers such as personal computers or the like.

## Claims

1. A device (100) for identifying network devices (101, 102, 103) which are located in a network address translation, NAT, based communication network (104), wherein the device (100) comprises:
- an obtaining unit (105), configured to obtain network traffic sent to or from the NAT based communication network (104);
- an extracting unit (106), configured to extract identification data from the obtained network traffic; and
- a processing unit (107), configured to
perform a first method to determine a first number of network devices in the NAT based communication network (104) and a first confidence value, based on the identification data;
perform a second method to determine a second number of network devices in the NAT based communication network (104) and a second confidence value, based on the identification data; and
calculate a weighted result based on the first number, the first confidence value, the second number and the second confidence value,
wherein the identification data includes a GQUIC user agent identifier, a TCP fingerprint, an SSL fingerprint, or a network traffic classifier,
wherein the processing unit (107) is further configured to select the first method from: GQUIC user agent identifier correlation, TCP fingerprinting, SSL fingerprinting, or network traffic classification correlation; and
wherein the processing unit (107) is configured to select the second method from: GQUIC user agent identifier correlation, TCP fingerprinting, SSL fingerprinting, or network traffic classification correlation;
wherein the first method and the second method are different,
wherein the first confidence value is a value indicating the probability of correctness of the first number determined by the first method, and the second confidence value is a value indicating the probability of correctness of the second number determined by the second method.

2. The device (100) according to any one of the preceding claims, wherein the first number is a minimum number of network devices in the NAT based communication network (104) and/or wherein the second number is a minimum number of network devices in the NAT based communication network (104) .

3. The device (100) according to any one of the preceding claims, wherein the processing unit (107) is further configured to indicate in the weighted result, a correspondence of network devices in the NAT based communication network (104) to a network stream in the obtained network traffic.

4. A method (200) for identifying network devices (101, 102, 103) which are located in a network address translation, NAT, based communication network (104), wherein the method (200) comprises the steps of:
- obtaining (201), by an obtaining unit (105) of a device (100), network traffic sent to or from the NAT based communication network (104);
- extracting (202), by an extracting unit (106) of the device (100), identification data from the obtained network traffic; and
- performing (203) a first method to determine a first number of network devices in the NAT based communication network (104) and a first confidence value, based on the identification data;
performing (203) a second method to determine a second number of network devices in the NAT based communication network (104) and a second confidence value, based on the identification data; and
calculating (203) a weighted result based on the first number, the first confidence value, the second number and the second confidence value,
wherein the identification data includes a GQUIC user agent identifier, a TCP fingerprint, an SSL fingerprint, or a network traffic classifier,
wherein the method further comprises the step of selecting, by the processing unit (107), the first method from: GQUIC user agent identifier correlation, TCP fingerprinting, SSL fingerprinting, or network traffic classification correlation; and
the step of selecting, by the processing unit (107), the second method from: GQUIC user agent identifier correlation, TCP fingerprinting, SSL fingerprinting, or network traffic classification correlation;
wherein the first method and the second method are different,
wherein the first confidence value is a value indicating the probability of correctness of the first number determined by the first method, and the second confidence value is a value indicating the probability of correctness of the second number determined by the second method.

5. The method (200) according to claim 4, wherein the first number is a minimum number of network devices in the NAT based communication network (104) and/or wherein the second number is a minimum number of network devices in the NAT based communication network (104).

6. The method (200) according to any one of claims 4 to 5, wherein the method further comprises the step of indicating, by the processing unit (107), in the weighted result, a correspondence of network devices in the NAT based communication network (104) to a network stream in the obtained network traffic.

7. A computer program product with a program code for performing all steps of the method (200) according to any one of claims 4 to 6, when the computer program product runs on a computer or a digital signal processor.

## Patentansprüche

1. Vorrichtung (100) zum Identifizieren von Netzwerkvorrichtungen (101, 102, 103), die sich in einem auf der Netzwerkadressübersetzung, NAT, basierenden Kommunikationsnetzwerk (104) befinden, wobei die Vorrichtung (100) Folgendes umfasst:
- eine Erhaltungseinheit (105), die dazu ausgelegt ist, Netzwerkverkehr, der an das oder vom NAT-basierten Kommunikationsnetzwerk (104) gesendet wird, zu erhalten;
- eine Extraktionseinheit (106), die dazu ausgelegt ist, Identifikationsdaten aus dem erhaltenen Netzwerkverkehr zu extrahieren; und
- eine Verarbeitungseinheit (107), die dazu ausgelegt ist, ein erstes Verfahren durchzuführen, um auf Basis der Identifikationsdaten zu eine erste Anzahl von Netzwerkvorrichtungen im NAT-basierten Kommunikationsnetzwerk (104) und einen ersten Vertrauenswert bestimmen;
Durchführen eines zweiten Verfahrens, um auf Basis der Identifikationsdaten eine zweite Anzahl von Netzwerkvorrichtungen im NAT-basierten Kommunikationsnetzwerk (104) und einen zweiten Vertrauenswert zu bestimmen; und
Berechnen eines gewichteten Ergebnisses auf Basis der ersten Anzahl, des ersten Vertrauenswertes, der zweiten Anzahl und des zweiten Vertrauenswertes,
wobei die Identifikationsdaten eine GQUIC-Benutzeragentenkennung, einen TCP-Fingerabdruck, einen SSL-Fingerabdruck oder einen Netzwerkverkehrsklassifizierer beinhalten,
wobei die Verarbeitungseinheit (107) ferner dazu ausgelegt ist, das erste Verfahren aus Folgendem auszuwählen: GQUIC-Benutzeragentenkennungskorrelation, TCP-Fingerabdruckerzeugung, SSL-Fingerabdruckerzeugung oder Netzwerkverkehrsklassifiziererkorrelation; und
wobei die Verarbeitungseinheit (107) dazu ausgelegt ist, das zweite Verfahren aus Folgendem auszuwählen: GQUIC-Benutzeragentenkennungskorrelation, TCP-Fingerabdruckerzeugung, SSL-Fingerabdruckerzeugung oder Netzwerkverkehrsklassifiziererkorrelation;
wobei das erste Verfahren und das zweite Verfahren verschieden sind,
wobei der erste Vertrauenswert ein Wert ist, der die Wahrscheinlichkeit der Richtigkeit der ersten Anzahl, die mit dem ersten Verfahren bestimmt wird, anzeigt, und der zweite Vertrauenswert ein Wert ist, der die Wahrscheinlichkeit der Richtigkeit der zweiten Anzahl, die vom zweiten Verfahren bestimmt wird, anzeigt.

2. Vorrichtung (100) nach einem der vorhergehenden Ansprüche, wobei die erste Anzahl eine minimale Anzahl von Netzwerkvorrichtungen im NAT-basierten Kommunikationsnetzwerk (104) ist und/oder wobei die zweite Anzahl eine minimale Anzahl von Netzwerkvorrichtungen im NAT-basierten Kommunikationsnetzwerk (104) ist.

3. Vorrichtung (100) nach einem der vorhergehenden Ansprüche, wobei die Verarbeitungseinheit (107) ferner dazu ausgelegt ist, im gewichteten Ergebnis einer Entsprechung von Netzwerkvorrichtungen im NAT-basierten Kommunikationsnetzwerk (104) zu einem Netzwerkstrom im erhaltenen Netzwerkverkehr anzuzeigen.

4. Verfahren (200) zum Identifizieren von Netzwerkvorrichtungen (101, 102, 103), die sich in einem auf der Netzwerkadressübersetzung, NAT, basierenden Kommunikationsnetzwerk (104) befinden, wobei das Verfahren (200) die folgenden Schritte umfasst:
- Erhalten (201) von Netzwerkverkehr, der an das oder vom NAT-basierten Kommunikationsnetzwerk (104) gesendet wird, durch eine Erhaltungseinheit (105) einer Vorrichtung (100);
- Extrahieren (202) von Identifikationsdaten aus dem erhaltenen Netzwerkverkehr durch eine Extraktionseinheit (106) der Vorrichtung (100); und
- Durchführen (203) eines ersten Verfahrens, um auf Basis der Identifikationsdaten eine erste Anzahl von Netzwerkvorrichtungen im NAT-basierten Kommunikationsnetzwerk (104) und einen ersten Vertrauenswert zu bestimmen;
Durchführen (203) eines zweiten Verfahrens, um auf Basis der Identifikationsdaten eine zweite Anzahl von Netzwerkvorrichtungen im NAT-basierten Kommunikationsnetzwerk (104) und einen zweiten Vertrauenswert zu bestimmen; und
Berechnen (203) eines gewichteten Ergebnisses auf Basis der ersten Anzahl, des ersten Vertrauenswertes, der zweiten Anzahl und des zweiten Vertrauenswertes,
wobei die Identifikationsdaten eine GQUIC-Benutzeragentenkennung, einen TCP-Fingerabdruck, einen SSL-Fingerabdruck oder einen Netzwerkverkehrsklassifizierer beinhalten,
wobei das Verfahren ferner den Schritt des Auswählens des ersten Verfahrens durch die Verarbeitungseinheit (107) aus Folgendem umfasst: GQUIC-Benutzeragentenkennungskorrelation, TCP-Fingerabdruckerzeugung, SSL-Fingerabdruckerzeugung oder Netzwerkverkehrsklassifiziererkorrelation; und
den Schritt des Auswählens des zweiten Verfahrens durch die Verarbeitungseinheit (107) aus Folgendem: GQUIC-Benutzeragentenkennungskorrelation, TCP-Fingerabdruckerzeugung, SSL-Fingerabdruckerzeugung oder Netzwerkverkehrsklassifiziererkorrelation;
wobei das erste Verfahren und das zweite Verfahren verschieden sind,
wobei der erste Vertrauenswert ein Wert ist, der die Wahrscheinlichkeit der Richtigkeit der ersten Anzahl, die mit dem ersten Verfahren bestimmt wird, anzeigt, und der zweite Vertrauenswert ein Wert ist, der die Wahrscheinlichkeit der Richtigkeit der zweiten Anzahl, die vom zweiten Verfahren bestimmt wird, anzeigt.

5. Verfahren (200) nach Anspruch 4, wobei die erste Anzahl eine minimale Anzahl von Netzwerkvorrichtungen im NAT-basierten Kommunikationsnetzwerk (104) ist und/oder wobei die zweite Anzahl eine minimale Anzahl von Netzwerkvorrichtungen im NAT-basierten Kommunikationsnetzwerk (104) ist.

6. Verfahren (200) nach einem der Ansprüche 4 bis 5, wobei das Verfahren ferner den Schritt des Anzeigens einer Entsprechung von Netzwerkvorrichtungen im NAT-basierten Kommunikationsnetzwerk (104) zu einem Netzwerkstrom im erhaltenen Netzwerkverkehr durch die Verarbeitungseinheit (107) im gewichteten Ergebnis umfasst.

7. Computerprogrammprodukt mit einem Programmcode zum Durchführen aller Schritte des Verfahrens (200) nach einem der Ansprüche 4 bis 6, wenn das Computerprogrammprodukt auf einem Computer oder einem digitalen Signalprozessor ausgeführt wird.

## Revendications

1. Dispositif (100) pour identifier des dispositifs de réseau (101, 102, 103) qui sont situés dans un réseau de communication (104) basé sur une traduction d'adresse de réseau, NAT, dans lequel le dispositif (100) comprend :
- une unité d'obtention (105), configurée pour obtenir un trafic réseau envoyé vers ou depuis le réseau de communication (104) basé sur la NAT ;
- une unité d'extraction (106), configurée pour extraire des données d'identification du trafic réseau obtenu ; et
- une unité de traitement (107), configurée pour
réaliser un premier procédé pour déterminer un premier nombre de dispositifs de réseau dans le réseau de communication (104) basé sur la NAT et une première valeur de confiance, sur la base des données d'identification ;
réaliser un deuxième procédé pour déterminer un deuxième nombre de dispositifs de réseau dans le réseau de communication (104) basé sur la NAT et une deuxième valeur de confiance, sur la base des données d'identification ; et
calculer un résultat pondéré sur la base du premier nombre, de la première valeur de confiance, du deuxième nombre et de la deuxième valeur de confiance,
dans lequel les données d'identification comportent un identifiant d'agent utilisateur GQUIC, une empreinte TCP, une empreinte SSL ou un classificateur de trafic réseau,
dans lequel l'unité de traitement (107) est en outre configurée pour sélectionner le premier procédé parmi : une corrélation d'identifiant d'agent utilisateur GQUIC, une prise d'empreinte TCP, une prise d'empreinte SSL ou une corrélation de classification de trafic réseau ; et
dans lequel l'unité de traitement (107) est configurée pour sélectionner le deuxième procédé parmi : une corrélation d'identifiant d'agent utilisateur GQUIC, une prise d'empreinte TCP, une prise d'empreinte SSL ou une corrélation de classification de trafic réseau ;
dans lequel le premier procédé et le deuxième procédé sont différents,
dans lequel la première valeur de confiance est une valeur indiquant la probabilité d'exactitude du premier nombre déterminé par le premier procédé, et la deuxième valeur de confiance est une valeur indiquant la probabilité d'exactitude du deuxième nombre déterminé par le deuxième procédé.

2. Dispositif (100) selon l'une quelconque des revendications précédentes, dans lequel le premier nombre est un nombre minimal de dispositifs de réseau dans le réseau de communication (104) basé sur la NAT et/ou dans lequel le deuxième nombre est un nombre minimal de dispositifs de réseau dans le réseau de communication (104) basé sur la NAT.

3. Dispositif (100) selon l'une quelconque des revendications précédentes, dans lequel l'unité de traitement (107) est en outre configurée pour indiquer dans le résultat pondéré une correspondance entre des dispositifs de réseau dans le réseau de communication (104) basé sur la NAT et un flux de réseau dans le trafic réseau obtenu.

4. Procédé (200) pour identifier des dispositifs de réseau (101, 102, 103) qui sont situés dans un réseau de communication (104) basé sur une traduction d'adresse de réseau, NAT, dans lequel le procédé (200) comprend les étapes :
- d'obtention (201), par une unité d'obtention (105) d'un dispositif (100), d'un trafic réseau envoyé vers ou depuis le réseau de communication (104) basé sur la NAT ;
- d'extraction (202), par une unité d'extraction (106) du dispositif (100), de données d'identification à partir du trafic réseau obtenu ; et
- de réalisation (203) d'un premier procédé pour déterminer un premier nombre de dispositifs de réseau dans le réseau de communication (104) basé sur la NAT et une première valeur de confiance, sur la base des données d'identification ;
- de réalisation (203) d'un deuxième procédé pour déterminer un deuxième nombre de dispositifs de réseau dans le réseau de communication (104) basé sur la NAT et une deuxième valeur de confiance, sur la base des données d'identification ; et
- de calcul (203) d'un résultat pondéré sur la base du premier nombre, de la première valeur de confiance, du deuxième nombre et de la deuxième valeur de confiance,
dans lequel les données d'identification comportent un identifiant d'agent utilisateur GQUIC, une empreinte TCP, une empreinte SSL ou un classificateur de trafic réseau,
dans lequel le procédé comprend en outre
l'étape de sélection, par l'unité de traitement (107), du premier procédé parmi : une corrélation d'identifiant d'agent utilisateur GQUIC, une prise d'empreinte TCP, une prise d'empreinte SSL ou une corrélation de classification de trafic réseau ; et
l'étape de sélection, par l'unité de traitement (107), du deuxième procédé parmi : une corrélation d'identifiant d'agent utilisateur GQUIC, une prise d'empreinte TCP, une prise d'empreinte SSL ou une corrélation de classification de trafic réseau ;
dans lequel le premier procédé et le deuxième procédé sont différents,
dans lequel la première valeur de confiance est une valeur indiquant la probabilité d'exactitude du premier nombre déterminé par le premier procédé, et la deuxième valeur de confiance est une valeur indiquant la probabilité d'exactitude du deuxième nombre déterminé par le deuxième procédé.

5. Procédé (200) selon la revendication 4, dans lequel le premier nombre est un nombre minimal de dispositifs de réseau dans le réseau de communication (104) basé sur la NAT et/ou dans lequel le deuxième nombre est un nombre minimal de dispositifs de réseau dans le réseau de communication (104) basé sur la NAT.

6. Procédé (200) selon l'une quelconque des revendications 4 et 5, dans lequel le procédé comprend en outre l'étape d'indication, par l'unité de traitement (107), dans le résultat pondéré, d'une correspondance entre des dispositifs de réseau dans le réseau de communication (104) basé sur la NAT et un flux de réseau dans le trafic réseau obtenu.

7. Produit de programme informatique avec un code de programme pour réaliser toutes les étapes du procédé (200) selon l'une quelconque des revendications 4 à 6, lorsque le produit de programme informatique s'exécute sur un ordinateur ou un processeur de signal numérique.
